# EUROPEAN PATENT APPLICATION

(11) **EP 1 462 002 A1**
(43) Date of publication of application: **29.09.2004**
(21) Application number: 04386010.5
(22) Date of filing: 26.03.2004
(51) Int. Cl.: A01M 7/00

(54) **Agricultural spray system**

(30) Priority: 27.03.2003 GR 2003100149
(71) Applicant: Ditsolas, Demetrios, 59035 Hellas (GR); Ditsolas, Georgios, 59035 Hellas (GR)
(72) Inventor: Ditsolas, Demetrios, 59035 Hellas (GR); Ditsolas, Georgios, 59035 Hellas (GR)

(57) **Abstract**

The nebula-sprayers are well known agricultural machines which inject pesticides. They are consisted in a tank which contains the mixture of the pesticides, a membrane pump, beck sprayer and an air turbine producing air stream.

The invention is based in the pre-mixture of plant-remedy and air before this is sprayed from the injectors and especially inside them.

In the machine is installed a common air compressor which is capable to be powered neither with Cardan axis, either electrically, or with or with combustion engine.

The air compressor compressor supplies compressed air via a conductor (fig.1-10) to the selector (fig.1-1) which is possible to be one or more and situated up of the maximum level of the pesticides in the tank, so that the mixture doesn't enter inside it due to the chamber-pots.

From the selector (fig.1-1) the compressed air is distributed to the cyclic disposed semi conductors (fig. 1-2) which are connected to one of the entrances of the injectors so that it is possible to enter in 30 the area of pre-carburation (fig.1-6).The other entrance of the injector is connected The other entrance of the injector is connected to the common joint of the injection machines, with the mixture supply pump. The air is mixtured inside the injector producing already the nebula.

The system can be used in all types of nebula sprayers.

## Description

The nebula-sprayers are well known agricultural machines which inject pesticides. They are consisted in a tank which contains the mixture of the pesticides, a membrane pump, beck sprayer and an air turbine producing air stream.

Their function is based on the capability of the pump to send the mixture from the tank to a cyclic serie of injectors (beck) which are located on the back of the machine. Behind the cyclic order of the injectors there is the blade of the air turbine, which impulses airmass behind the injectors (becks) so that the pesticides can be mixed and produce the smallest possible drops (nebula) that are injected on the plants (normally tree cultures).

The invention is based in the pre-carburation of the pesticides with air, before it is injected from the injectors and especially be mixed inside them.

The invention is consisted of double entrance injectors, left and right, the air compressor, the mixture conductors, the semiconductors of air, the air selector with each outlet to the injectors, the central air conductor from the air compressor, and the non-return valve.

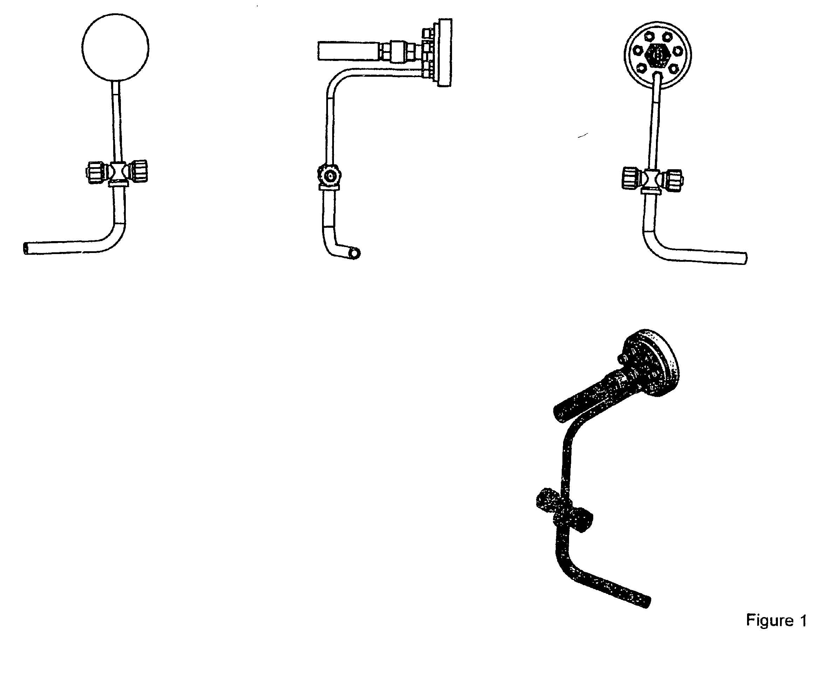

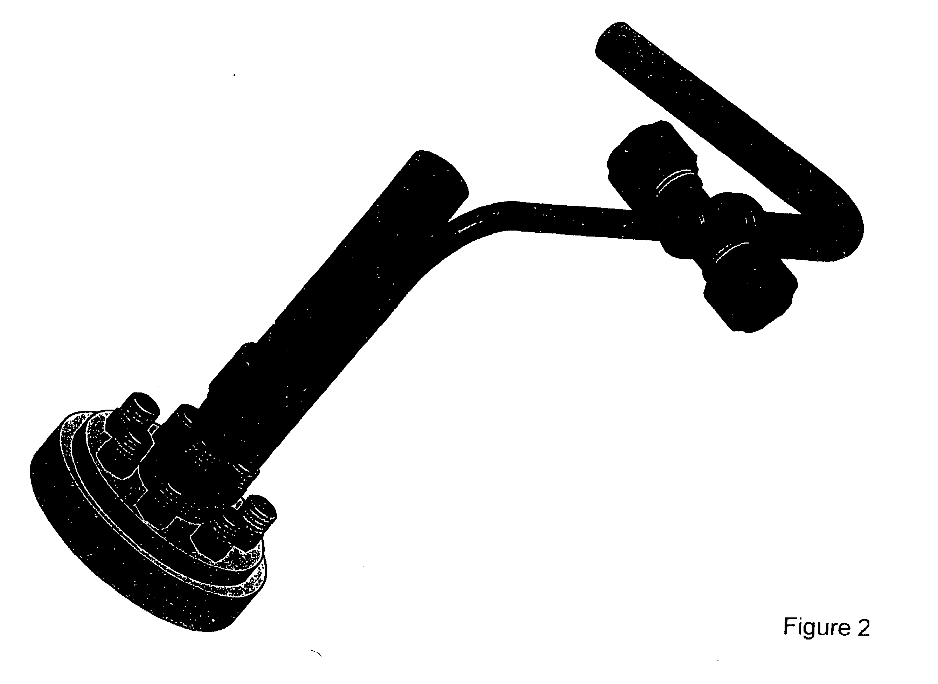

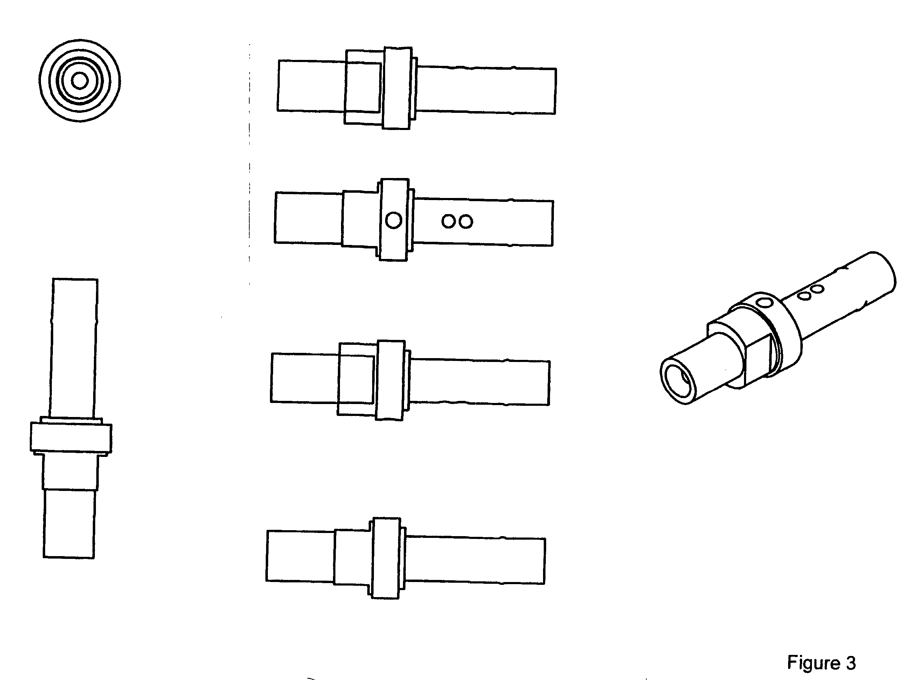

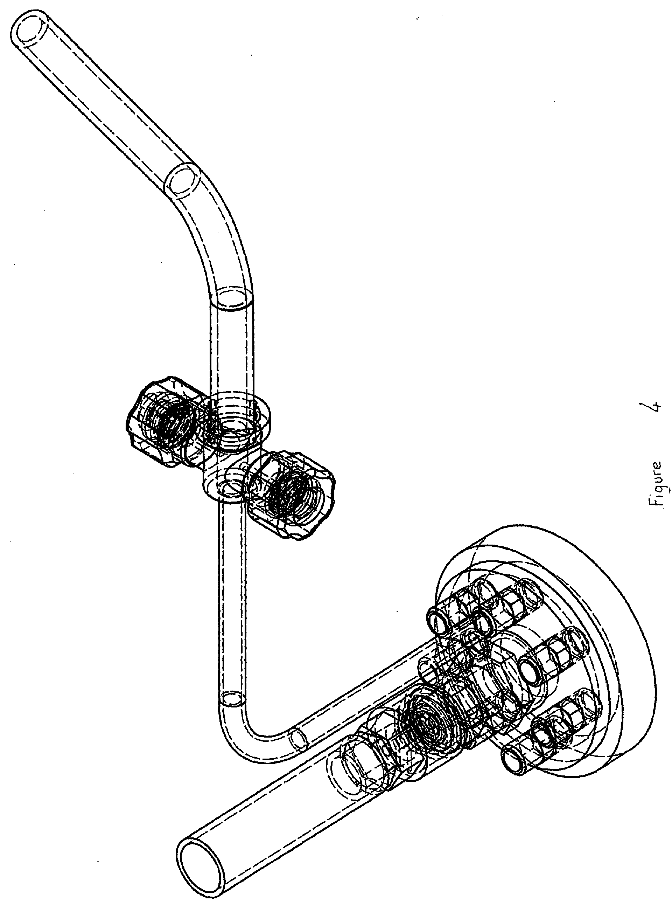

In the machine is installed a common air compressor that is capable to bepowered neither with Cardan axis, either electrically, or with combustion engine. The air compressor supplies compressed air via conductor to the selector which it is possible to be one or more and combustion engine. The air compressor supplies compressed air via a conductor (fig.1-10) to the selector (fig.1-1) which is possible to be one or more and situated up of the maximum level of the pesticides in the tank, so that the mixture doesn't enter inside it due to the chamber-pots. From the selector (fig.1-1) the compressed air is distributed to the cyclic disposed semi conductors (fig. 1-2) which are connected to one of the entrances of the injectors so that it is possible to enter in the area of pre-carburation (fig.1-6).The other entrance of the injector is connected to the common joint of the injection machines, with the mixture supply pump. The air is mixtured inside the injector producing already the nebula that blows away after its exit, producing current air obtained from the air turbine with which are proporcioned all the nebula sprayer machines. This way is succeeded best nebula of the pesticides so that it is consumed extremely small quantity which is not only more economic in the process of the precarburation but also more ecological due to the smallest consume of plant-remedy.More advantages of the invention is that the compressed air that is produced is given with more supplies so that the user can modify the machine in pruning air compressor, so that it is not necessary the transport of a second machine to the field.

The system can be used in all types of nebula sprayers, either by air-turbine, neither by linear air stream, or in systems of low spraying.

## Claims

1. System of pre-carburation in an agricultural nebula sprayer with mixture of air/pesticides inside the injector (beck). For the function of the system is demanded the installation of air compressor on the agricultural nebula sprayer.

2. To accord with the claim 1 the system carries a serie of double entrance injectors, from one entrance enters the mixture of the plant-remedy and from the other entrance, the air.

3. To accord to the claims 1 and 2 the system carries air selectors of compressed air, installed on the upper level of the tank, which are supplied with non- return valves forbidding the entrance of pesticides inside them.
